# EUROPÄISCHE PATENTSCHRIFT

(11) **EP 2 600 998 B1**
(45) Veröffentlichungstag und Bekanntmachung des Hinweises auf die Patenterteilung: **10.10.2018**
(21) Anmeldenummer: 11741201.5
(22) Anmeldetag: 03.08.2011
(51) Int. Cl.: B23B 27/04, B23B 29/04

(54) **SCHNEIDWERKZEUG ZUM EINSTECHEN UND STECHDREHEN**
CUTTING TOOL FOR RECESSING AND GROOVING
OUTIL DE COUPE POUR PLONGÉE ET RAINURAGE AU TOUR

(30) Priorität: 04.08.2010 DE 102010038878
(43) Veröffentlichungstag der Anmeldung: 12.06.2013
(60) Teilanmeldung: 18157082.1
(73) Patentinhaber: CeramTec GmbH, 73207 Plochingen (DE)
(72) Erfinder: SEVDIC, Nebojsa, 73207 Plochingen (DE); STEMMER, Uwe, 72622 Nürtingen (DE); KRESSEL, Heinz, 87640 Ebenhofen (DE)
(74) Vertreter: Rottmayer, Hans
(86) Internationale Anmeldenummer: PCT/EP2011/063387
(87) Internationale Veröffentlichungsnummer: WO 2012/017018

(56) Entgegenhaltungen:
- WO-A1-00/51768
- DE-A1- 2 259 216
- DE-A1-102008 001 135
- DE-C1- 3 909 358
- DE-U1- 8 214 831
- US-A1- 2009 142 149

## Beschreibung

Die Erfindung betrifft ein Schneidwerkzeug zum radialen und axialen Einstechen und zum seitlichen Verfahren, zum sogenannten Stechdrehen von hauptsächlich metallischen Werkstoffen, mit einem Klemmhalter und einer am Klemmhalter befestigten Schneidkörperunterlage auf der ein Schneidkörper des Schneidwerkzeugs aufliegt, der von einem Spannfinger einer Spannpratze des Schneidwerkzeugs auf die Schneidkörperunterlage gedrückt wird, wobei der Schneidkörper auf der Schneidkörperunterlage über ein Prisma geführt ist.
Ein solches Schneidwerkzeug zeigt DE 10 2008 001135 A1.
Der Erfindung liegt die Aufgabe zugrunde, ein Schneidwerkzeug mit seinen Bauteilen nach dem Oberbegriff des Anspruchs 1 so zu verbessern, dass auch seitliche Drehbearbeitungen durchzuführen sind, ohne dass sich der Schneidkörper aus seinem Sitz herausdrehen kann. Außerdem soll ein seitliches Wegdrehen der Spannpratze verhindert werden.
Erfindungsgemäß wird diese Aufgabe dadurch gelöst, dass der Schneidkörper auf seiner zum Spannfinger gewandten ebenen Oberfläche zwei entgegengesetzt geneigte ebene rechteckige Dachschrägen in der Art eines Sattel- oder Giebeldachs eines Hauses aufweist, die sich ausgehend von der Oberfläche in den Schneidkörper hinein erstrecken und der Spannfinger an seiner zum Schneidkörper gewandten Unterseite zwei an die Schrägen angepasste Rampen aufweist.
Da der Schneidkörper einerseits auf der Schneidkörperunterlage über ein Prisma geführt ist und andererseits auf seiner Oberfläche Dachschrägen aufweist, in die entsprechende Rampen am Spannfinger eingreifen, ist der Schneidkörper auf seiner Ober- und Unterseite geführt und kann auch seitliche Drehbearbeitungen ausführen, ohne dass er sich aus seinem Sitz herausdreht.

Bevorzugt ist zwischen den zwei Dachschrägen eine Firstfläche angeordnet, die einen Teil der Oberfläche des Schneidkörpers bildet. Diese Firstfläche wird benötigt, damit keine scharfe Kante entsteht und diese sich in das Spannelement bzw. den Spannfinger der Spannpratze eindrücken kann. Im Spannelement bzw. im Spannfinger befindet sich ein Radius zwischen den zwei Dachschrägen.

In einer erfinderischen Ausgestaltung bildet die Firstfläche ein Rechteck mit einer kürzeren und einer längeren Seite. Bevorzugt ist die kürzere Seite des Rechtecks gleich der Breite b der Firstfläche 9 und damit gleich dem Abstand der Dachschrägen 7 voneinander und ist die längere Seite des Rechtecks gleich der Breite B der Dachschrägen. Hierdurch ist die zur Verfügung stehende Fläche optimal ausgenutzt.

In bevorzugter Ausführungsform verlaufen die Dachschrägen in einem Winkel 15°> α > 5°bevorzugt α = 10° zur Oberfläche des Schneidkörpers, wobei sich die Dachschrägen ausgehend von der Firstfläche bis zum Rand des Schneidkörpers erstrecken. Nur bei diesen Winkeln ist der Schneidkörper einerseits nur wenig geschwächt und lässt sich andererseits einfach im Schneidwerkzeug verankern. Bei größeren Winkeln, d.h. größer als 15° würde der Schneidkörper zu sehr geschwächt. Bei Winkeln kleiner als 5° ist die Verankerung im Schneidwerkzeug nicht ausreichend.

Vorteilhafterweise sind die Schneidkörperunterlage und die Spannpratze auf dem Klemmhalter mit einer Nut/Feder-Verbindung passgenau geführt. Hierdurch ist eine bessere Verankerung erreicht.

In einer bevorzugten Ausführungsform ist auf dem Klemmhalter eine nach hinten, d. h. weg vom Schneidkörper geneigte, als Nut ausgebildete schiefe Ebene angeordnet und liegt die Spannpratze mit einer als Feder ausgebildeten ähnlich schiefen Ebene auf dieser in der Art einer Nut/Feder-Verbindung passgenau auf. Durch diese passgenaue Führung ist ein seitliches Wegdrehen des Spannelements vermieden, bzw. nicht mehr möglich.

Zur Erhöhung der Spannkraft der Spannpratze auf den Schneidkörper sind auf der schiefen Ebene der Spannpratze an dem den Rampen abgewandten Ende als Rippen ausgebildete Auflagepunkte angeordnet und ist die Durchführung für die Spannschraube am entgegen gesetzten, zu den Rampen gewandten Ende der schiefen Ebene angeordnet. Beim Einschrauben der Spannschraube wirkt hierdurch ein langer Hebelarm, wodurch die Spannkraft erhöht ist.

Ein bevorzugter Schneidkörper besteht aus einer Keramik und/oder CBN mit einer ebenen Ober- und Unterseite und mit die Ober- und Unterseite verbindenden Seitenflächen. Bevorzugt lässt er sich am eben beschriebenen Schneidwerkzeug einsetzen.

Der Schneidkörper weist auf seiner Oberseite zwei entgegengesetzt geneigte, ebene rechteckige Dachschrägen in der Art eines Sattel- oder Giebeldachs eines Hauses auf, die sich ausgehend von der Oberfläche in den Schneidkörper hinein erstrecken. Diese Dachschrägen ermöglichen einen verdrehsicheren Einbau in ein Schneidwerkzeug.

Bevorzugt ist zwischen den zwei Dachschrägen eine Firstfläche angeordnet, die einen Teil der Oberfläche des Schneidkörpers bildet. Diese Firstfläche wird benötigt, damit sich keine scharfen Kanten bilden.

In bevorzugter Ausführungsform verlaufen die Dachschrägen in einem Winkel 15°> α > 5°bevorzugt α = 10° zur Oberfläche des Schneidkörpers, wobei sich die Dachschrägen ausgehend von der Firstfläche bis zum Rand des Schneidkörpers erstrecken. Nur bei diesen Winkeln ist der Schneidkörper einerseits nur wenig geschwächt und lässt sich andererseits einfach im Schneidwerkzeug verankern. Bei größeren Winkeln, d.h. größer als 15° würde der Schneidkörper zu sehr geschwächt. Bei Winkeln kleiner als 5° ist die Verankerung im Schneidwerkzeug nicht ausreichend.
In bevorzugter Ausführungsform weist der Schneidkörper an seiner Unterseite abstehende Eingriffselemente auf. Hierdurch kann der Schneidkörper auf seiner Unterseite und durch die Dachschrägen auf seiner Oberseite verdrehsicher geführt werden. In einer bevorzugten Ausgestaltung sind die Eingriffselemente sphärische Auskragungen. Vorteilhafterweise sind daher die Eingriffselemente Teil einer Prismenführung.

In einer Ausgestaltung weisen die Auflageflächen der Ober- und Unterseite und/oder die Fasen des Schneidkörpers zumindest Teilflächen auf, die aus der beim Sintern entstandenen Sinterhaut bestehen und keine Schädigung durch eine materialabtragende Behandlung erfahren haben. Dadurch ist eine Nachbearbeitung nach dem Sintern zumindest teilweise vermieden.
In bevorzugter Ausführungsform bestehen die gesamte Ober- und Unterseite aus der beim Sintern entstandenen Sinterhaut. Da die Sinterhaut häufig eine höhere Härte als der Grundwerkstoff besitzt, wird die Verschleißfestigkeit des Schneidstoffes dadurch erhöht.
Umso mehr Fläche des Schneidkörpers aus der beim Sintern entstandenen Sinterhaut bestehen, umso höher ist die Härte. Bevorzugt bestehen daher alle Fasen und/oder Seiten aus der beim Sintern entstandenen Sinterhaut.

In einer Ausgestaltung bestehen daher einzelne Seitenflächen oder bevorzugt alle Seitenflächen aus der beim Sintern entstandenen Sinterhaut.
Die Ober- und/oder Unterseite und/oder die Seitenflächen und/oder die Fasen des Schneidkörpers können zur Verbesserung der Härte mit einer ein- oder mehrlagigen Beschichtung versehen sein.

Eine Spannpratze mit einem Spannfinger, insbesondere für das eben beschriebene Schneidwerkzeug ist dadurch gekennzeichnet, dass am Spannfinger zwei entgegengesetzt geneigte ebene rechteckige Rampen als Negativ eines Sattel- oder Giebeldachs eines Hauses angeordnet sind.
Wie schon erwähnt sind bevorzugt die Schneidkörperunterlage und die Spannpratze auf dem Klemmhalter mit einer Nut/Feder-Verbindung passgenau geführt. Hierdurch befinden sich diese immer in der erforderlichen Position.

In einer Ausgestaltung weist der Klemmhalter eine Nut auf und weist die Schneidkörperunterlage an ihrer zum Klemmhalter gewandten Seite eine Feder auf, wobei die Schneidkörperunterlage über die in die Nut eingreifende Feder passgenau auf dem Klemmhalter geführt ist.
Bevorzugt ist in der Nut und/oder auf der Anlagefläche der Schneidkörperunterlage auf dem Klemmhalter Gewindebohrungen eingebracht und weist die Schneidkörperunterlage an die Anzahl der Gewindebohrungen angepasste durchgehende Bohrungen auf und sind zur Befestigung der Schneidkörperunterlage auf dem Klemmhalter Schrauben, die Schneidkörperunterlage durchragend, in die Gewindebohrungen eingedreht. Hierdurch ist eine einfache und feste Verbindung hergestellt.
Bevorzugt ist die Schneidkörperunterlage im rechten Winkel zur Spannpratze angeordnet.
In der als Nut ausgebildeten schiefen Ebene auf dem Klemmhalter ist eine in einem Winkel y zur schiefen Ebene verlaufende Befestigungsbohrung eingebracht, in die eine die Spannpratze durchragende Spannschraube zur Befestigung der Spannpratze auf dem Klemmhalter eingreift.
Weitere Merkmale der Erfindung sind in den 12 Figuren gezeigt, die nachfolgend beschrieben werden.

Es zeigt:
- Figur 1:: ein erfindungsgemäßes Schneidwerkzeug 1 mit Klemmhalter 2, Schneidkörperunterlage 3, Spannpratze 5 und Schneidkörper 6,
- Figur 2:: die Elemente gemäß Figur 1 vergrößert,
- Figur 3:: den Klemmhalter 2 mit befestigter Schneidkörperunterlage 3 mit aufgelegtem Schneidkörper 6,
- Figur 4:: den Klemmhalter 2 alleine,
- Figur 5:: den Klemmhalter 2 mit befestigter Schneidkörperunterlage 3 alleine,
- Figur 6:: eine erfindungsgemäße Spannpratze 5 mit eingesetzter Spannschraube 17 als Ansicht,
- Figur 7:: die Spannpratze 5 ohne eingesetzter Spannschraube,
- Figur 8:: die Spannpratze 5 von unten,
- Figur 9:: den Klemmhalter 2 gemäß Figur 4 von der Seite,
- Figur 10:: den Klemmhalter 2 von oben,
- Figur 11:: die Schneidkörperunterlage 3 von der Seite (Figur 11a) und im Schnitt (Figur 11b) und
- Figur 12:: den Schneidkörper 6 von oben (Figur 12a) und als Ansicht (Figur 12b).

Der hier beschriebene Klemmhalter 2 wird auch als Grundhalter, die Schneidkörperunterlage 3 als Stechschwert und die Spannpratze 5 als Stechplatte bezeichnet.
Die Erfindung betrifft ein Schneidwerkzeug 1 (siehe Figuren), welches in seiner Grundkonzeption gleichermaßen zum Einstechen, Gewindeschneiden und Stechdrehen verwendet werden kann. Es besteht immer aus einem Grundträger, im Folgenden Klemmhalter 2 genannt, einer auswechselbaren Schneidkörperunterlage 3 und einem auswechselbaren Schneidkörperniederhalter, im Folgenden Spannpratze 5 genannt. Die Schneidkörperunterlage 3 und die Spannpratze 5 bilden das so genannte Spannsystem und sind an die Form und Funktion des verwendeten Schneidkörpers 6 angepasst.

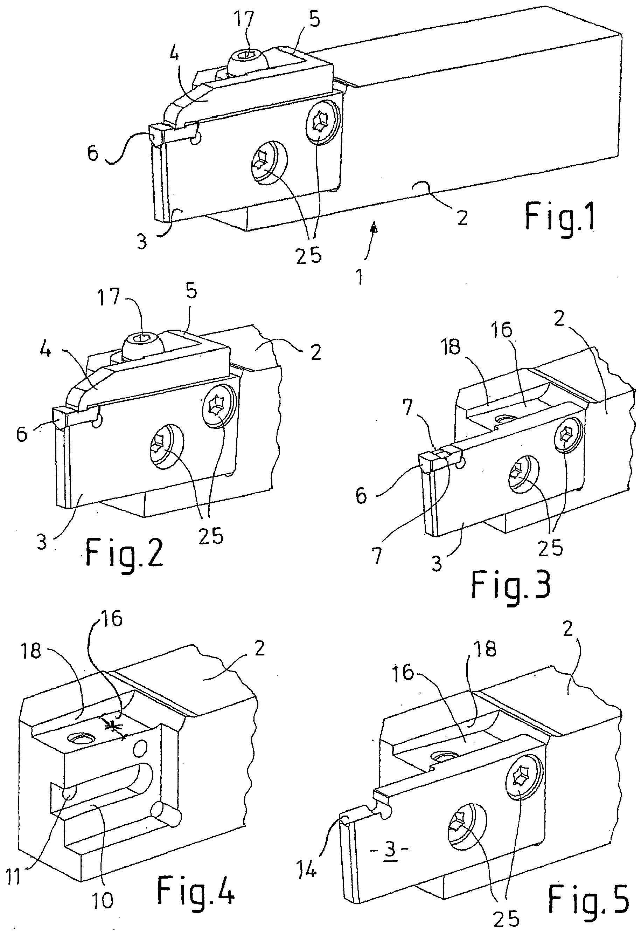

Der Klemmhalter 2 (siehe Figuren 1 bis 5) weist in axialer Richtung eine Führungsnut 10 (siehe Figur 4) auf, in deren Boden eine Gewindebohrung 11 eingebracht ist. In diese Führungsnut 10 ragt eine Feder 24 an der zum Klemmhalter 2 zeigenden Seite der Schneidkörperunterlage 3. Die Feder 24 ist passgenau in die Führungsnut 10 eingesetzt, so dass die Schneidkörperunterlage 3 auf dem Klemmhalter 2 passgenau geführt ist.

Zur formschlüssigen Verbindung des Schneidkörpers 6 auf der Schneidkörperunterlage 3 wird der Schneidkörper 6 durch eine prismenförmige Verbindung, auch als Führungsleiste 14 bezeichnet, zwischen der Unterseite des Schneidkörpers 6 und der Oberseite der Schneidkörperunterlage 3 geführt. Mögliche Form- und Lagefehler der miteinander wirkenden Komponenten werden durch die gleiche axiale Ausrichtung der Komponenten und die aufeinander abgestimmten Toleranzen der Anlagen, Führungen und Prismen im technischen Sinne einer Spielpassung kompensiert.

Weiterhin ist der Schneidkörper 6 auch auf seiner Oberseite 15a geführt. Hierzu weist der Schneidkörper 6 zwei entgegengesetzt geneigte, ebene rechteckige Dachschrägen 7 in der Art eines Sattel- oder Giebeldachs eines Hauses auf, die sich ausgehend von der Oberfläche 12 in den Schneidkörper 6 hinein erstrecken. Diese Dachschrägen 7 ermöglichen einen verdrehsicheren Einbau in ein Schneidwerkzeug 1.

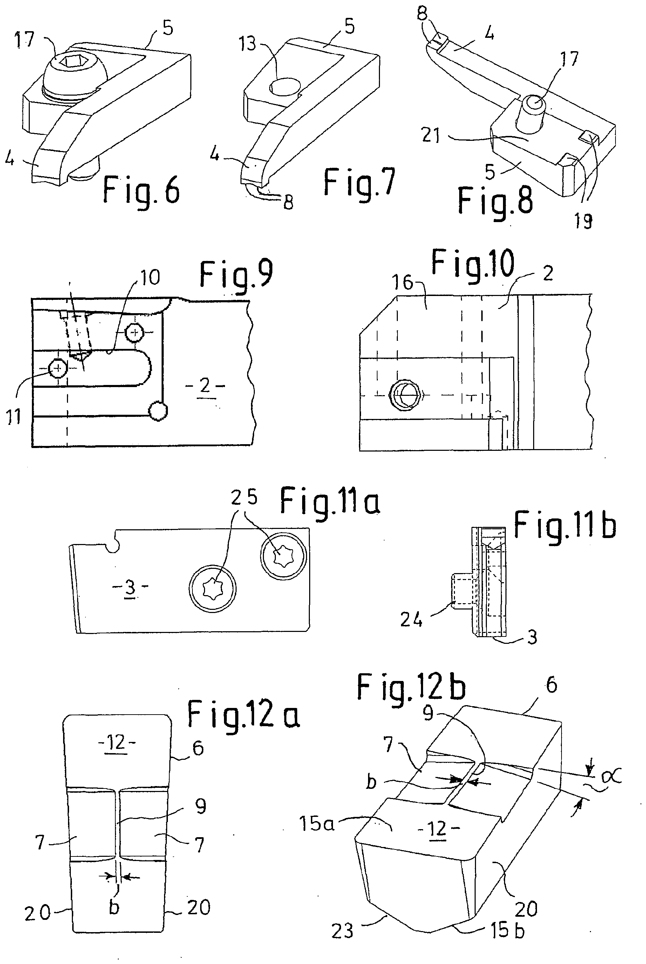

Zwischen den zwei Dachschrägen 7 ist eine Firstfläche 9 angeordnet, die einen Teil der Oberfläche 12 des Schneidkörpers bildet. Die vier Seiten der Firstfläche 9 bilden ein Rechteck. Bevorzugt ist die kürzere Seite gleich dem Abstand b der Firstflächen 9 voneinander und die längere Seite des Rechtecks gleich der Breite B der Dachschrägen (siehe Figur 11a).

Die Dachschrägen 7 verlaufen in der hier gezeigten Ausführungsform in einem Winkel α = 10° (siehe Figur 12b) zur Oberfläche 12 des Schneidkörpers 6, wobei sich die Dachschrägen 7 ausgehend von der Firstfläche 9 bis zum Rand des Schneidkörpers 6 erstrecken.

Zur passgenauen Verankerung des Schneidkörpers 6 auf der Schneidkörperunterlage 3 weist der Schneidkörper 6 an seiner Unterseite abstehende Eingriffselemente 23 auf. Hierdurch ist der Schneidkörper 6 auf seiner Unterseite 15b und durch die Dachschrägen 7 auf seiner Oberseite 15a verdrehsicher geführt. Die Eingriffselemente 23 sind bevorzugt sphärische Auskragungen. Die Eingriffselemente 23 sind Teil einer Prismenführung.

Ein weiteres Merkmal ist die besondere Ausführung und Lagerung der Spannpratze 5, die auf der Oberseite des Klemmhalters 2 durch eine Spannschraube 17 befestigt ist. Die Spannpratze 5 liegt mit ihrer schiefen Ebene 21 auf einer schiefen Ebene 16 auf dem Klemmhalter 2 auf und ist von der Führungsfläche 18 passgenau geführt (siehe Figuren 3 bis 8). Die Spannkraft der Spannschraube 17 drückt die Spannpratze 5 auf den Klemmhalter 2 auf die schiefe Ebene 16 bis diese mit den Auflagepunkten 19 auf der schiefen Ebene 16 angekommen sind. Ein weiteres Anziehen der Spannschraube 17 wirkt wie eine Hebelwirkung und spannt den Spannfinger 4 der Spannpratze 5 in Richtung Schneidkörper 6, wodurch eine zusätzliche Spannkraft auf den Schneidkörper 6 ausgeübt wird. Durch diese Spannkraft wird der Schneidköper 6 in das Prisma, bzw. die Führungsleiste 14 auf die Schneidkörperunterlage 3 gedrückt.

Zur Verstärkung dieser Hebelwirkung sind die Auflagepunkte 19 und die Durchführung 13 für die Spannschraube 17 möglichst weit voneinander auf der schiefen Ebene 21 entfernt.

Der Schneidkörper 6 besteht bevorzugt aus einer Keramik und/oder PCBN oder einem CBN-Werkstoff.

Der Schneidkörper 6 kann auch zur Vergrößerung der Härte mit einer Beschichtung versehen sein.

## Patentansprüche

1. Schneidwerkzeug (1) zum radialen und axialen Einstechen und zum seitlichen Verfahren, zum sogenannten Stechdrehen von hauptsächlich metallischen Werkstoffen, mit einem Klemmhalter (2) und einer am Klemmhalter (2) befestigten Schneidkörperunterlage (3) auf der ein Schneidkörper (6) des Schneidwerkzeugs (1) aufliegt, der von einem Spannfinger (4) einer Spannpratze (5) des Schneidwerkzeugs (1) auf die Schneidkörperunterlage (3) gedrückt wird, wobei der Schneidkörper (6) auf der Schneidkörperunterlage (3) über ein Prisma geführt ist, **dadurch gekennzeichnet, dass** der Schneidkörper (6) auf seiner zum Spannfinger (4) gewandten ebenen Oberfläche zwei entgegengesetzt geneigte ebene rechteckige Dachschrägen (7) in der Art eines Sattel- oder Giebeldachs eines Hauses aufweist, die sich ausgehend von der Oberfläche in den Schneidkörper (6) hinein erstrecken und der Spannfinger (4) an seiner zum Schneidkörper (6) gewandten Unterseite zwei an die Dachschrägen (7) angepasste Rampen (8) aufweist.

2. Schneidwerkzeug nach Anspruch 1, **dadurch gekennzeichnet, dass** zwischen den zwei Dachschrägen (7) eine Firstfläche (9) angeordnet ist, die einen Teil der Oberfläche (12) des Schneidkörpers (6) bildet.

3. Schneidwerkzeug nach Anspruch 2, **dadurch gekennzeichnet, dass** die Firstfläche (9) ein Rechteck mit einer kürzeren und einer längeren Seite bildet.

4. Schneidwerkzeug nach Anspruch 2 oder 3, **dadurch gekennzeichnet, dass** die kürzere Seite des Rechtecks gleich der Breite b der Firstfläche (9) und damit gleich dem Abstand der Dachschrägen (7) voneinander ist und die längere Seite des Rechtecks gleich der Breite B der Dachschrägen ist.

5. Schneidwerkzeug nach einem der Ansprüche 1 bis 4, **dadurch gekennzeichnet, dass** die Dachschrägen (7) in einem Winkel 15°> α > 5°bevorzugt α = 10° zur Oberfläche (12) des Schneidkörpers (6) verlaufen, wobei sich die Dachschrägen (7) ausgehend von der Firstfläche (9) bis zum Rand des Schneidkörpers (6) erstrecken.

6. Schneidwerkzeug nach einem der Ansprüche 1 bis 5, **dadurch gekennzeichnet, dass** die Schneidkörperunterlage (3) und die Spannpratze (5) auf dem Klemmhalter (2) mit einer Nut/Feder-Verbindung passgenau geführt sind.

7. Schneidwerkzeug nach einem der Ansprüche 1 bis 6, **dadurch gekennzeichnet, dass** auf dem Klemmhalter (2) eine nach hinten, d. h. weg vom Schneidkörper geneigte, als Nut ausgebildete schiefe Ebene (16) angeordnet ist und die Spannpratze (5) mit einer als Feder ausgebildeten ähnlich schiefen Ebene (21) auf dieser in der Art einer Nut/Feder- Verbindung passgenau aufliegt.

8. Schneidwerkzeug nach Anspruch 7, **dadurch gekennzeichnet, dass** auf der schiefen Ebene (21) der Spannpratze (5) an dem den Rampen (8) abgewandten Ende als Rippen ausgebildete Auflagepunkte (19) angeordnet sind und die Durchführung (13) für die Spannschraube (17) am entgegen gesetzten, zu den Rampen (8) gewandten Ende der schiefen Ebene (21) angeordnet ist.

## Claims

1. A cutting tool (1) for radial and axial recessing and for lateral motion, for so-called grooving of mainly metallic materials, having a clamp holder (2) and a cutting element base (3) which is fastened to the clamp holder (2) and on which there rests a cutting element (6) of the cutting tool (1) that is pressed onto the cutting element base (3) by a clamping finger (4) of a clamping claw (5) of the cutting tool (1), wherein the cutting element (6) is guided on the cutting element base (3) by way of a prism, **characterised in that** the cutting element (6) has, on its planar surface facing the clamping finger (4), two oppositely inclined planar rectangular roof slopes (7) in the manner of a saddle roof or gable roof of a house that extend, starting from the surface, into the cutting element (6), and the clamping finger (4) has, on its lower side facing the cutting element (6), two ramps (8) which are adapted to the roof slopes (7).

2. A cutting tool according to claim 1, **characterised in that** arranged between the two roof slopes (7) there is a ridge surface (9) that forms a portion of the surface (12) of the cutting element (6).

3. A cutting tool according to claim 2, **characterised in that** the ridge surface (9) forms a rectangle with a shorter and a longer side.

4. A cutting tool according to claim 2 or 3, **characterised in that** the shorter side of the rectangle is equal to the width b of the ridge surface (9) and thus equal to the distance of the roof slopes (7) from each other, and the longer side of the rectangle is equal to the width B of the roof slopes.

5. A cutting tool according to one of claims 1 to 4, **characterised in that** the roof slopes (7) extend at an angle of 15°> α > 5°, preferably α = 10°, with respect to the surface (12) of the cutting element (6), wherein the roof slopes (7) extend, starting from the ridge surface (9), as far as the edge of the cutting element (6).

6. A cutting tool according to one of claims 1 to 5, **characterised in that** the cutting element base (3) and the clamping claw (5) are guided with a precise fit on the clamp holder (2) with a tongue/groove connection.

7. A cutting tool according to one of claims 1 to 6, **characterised in that** arranged on the clamp holder (2) there is a sloping plane (16) which is inclined rearwards, that is, away from the cutting element, and is formed as a groove, and the clamping claw (5) with a similarly sloping plane (21) formed as a tongue rests with a precise fit on the latter in the manner of a tongue/groove connection.

8. A cutting tool according to claim 7, **characterised in that** arranged on the sloping plane (21) of the clamping claw (5) there are support points (19) formed as ribs at the end remote from the ramps (8), and the lead-through (13) for the clamping screw (17) is arranged at the opposite end of the sloping plane (21) facing the ramps (8).

## Revendications

1. Outil de coupe (1) destiné à la plongée radiale et axiale et au déplacement latéral, en vue du rainurage dit « au tour » de matériaux principalement métalliques, comprenant un porte-plaquette (2) et un support de corps de coupe (3) qui est fixé au porte-plaquette (2) et sur lequel est en appui un corps de coupe (6) de l'outil de coupe (1) qui est pressé sur le support de corps de coupe (3) par un doigt de serrage (4) d'une griffe de serrage (5) de l'outil de coupe (1), le corps de coupe (6) étant guidé sur le support de corps de coupe (3) par l'intermédiaire d'un prisme, **caractérisé en ce que** le corps de coupe (6), sur sa surface plane tournée vers le doigt de serrage (4), présente deux pans de toit (7) plans rectangulaires, inclinés dans des sens opposés, à la manière d'un toit à deux versants ou à pignon, qui s'étendent à partir de la surface dans le corps de coupe (6), et le doigt de serrage (4), sur sa face inférieure tournée vers le corps de coupe (6), présente deux rampes (8) adaptées aux pans de toit (7).

2. Outil de coupe selon la revendication 1, **caractérisé en ce qu'**il est prévu entre les deux pans de toit (7), une surface de faîte (9) qui constitue une partie de la surface (12) du corps de coupe (6).

3. Outil de coupe selon la revendication 2, **caractérisé en ce que** la surface de faîte (9) forme un rectangle avec un côté plus court et un côté plus long.

4. Outil de coupe selon la revendication 2 ou 3, **caractérisé en ce que** le côté plus court du rectangle est égal à la largeur b de la surface de faîte (9) et donc égal à la distance entre les pans de toit (7), et le côté plus long du rectangle est égal à la largeur B des pans de toit.

5. Outil de coupe selon une des revendications 1 à 4, **caractérisé en ce que** les pans de toit (7) s'étendent par rapport à la surface (12) du corps de coupe (6) en formant un angle de 15° > α > 5°, de préférence avec α = 10°, sachant que les pans de toit (7), partent de la surface de faîte (9) jusqu'au bord du corps de coupe (6).

6. Outil de coupe selon une des revendications 1 à 5, **caractérisé en ce que** le support de corps de coupe (3) et la griffe de serrage (5) sont guidés avec ajustage serré sur le porte-plaquette (2), avec une liaison à languette et rainure.

7. Outil de coupe selon une des revendications 1 à 6, **caractérisé en ce que** sur le porte-plaquette (2), il est prévu un plan (16) oblique qui est incliné vers l'arrière, c'est-à-dire dans la direction opposée au corps de coupe, et est réalisé sous forme de rainure, et la griffe de serrage (5) est en appui avec ajustage serré sur ce plan, avec un plan (21) oblique similaire réalisé sous forme de languette, à la manière d'une liaison à languette et rainure.

8. Outil de coupe selon la revendication 7, **caractérisé en ce que** sur le plan (21) oblique de la griffe de serrage (5), des points d'appui (19) réalisés sous forme de nervures sont disposés à l'extrémité éloignée des rampes (8), et le passage (13) pour la vis de serrage (17) est disposé à l'extrémité opposée du plan (21) oblique, tournée vers les rampes (8).
